# EUROPEAN PATENT APPLICATION

(11) **EP 4 224 840 A1**
(43) Date of publication of application: **09.08.2023**
(21) Application number: 23154640.9
(22) Date of filing: 02.02.2023
(51) Int. Cl.: H04N 9/31, G06F 3/14, G09G 5/00

(54) **IMAGE PROJECTION APPARATUS, MULTI-PROJECTION SYSTEM, IMAGE PROCESSING METHOD, AND PROGRAM**

(30) Priority: 08.02.2022 JP 2022018316
(71) Applicant: CANON KABUSHIKI KAISHA, Tokyo 146-8501 (JP)
(72) Inventor: ICHIMASA, Shoji, Tokyo (JP)
(74) Representative: WESER & Kollegen Patentanwälte PartmbB

(57) **Abstract**

An image projection apparatus (1000-1) configured to project an image includes a first input unit into which first image data (INA) is input, a second input unit into which second image data (INB) is input, and a generating unit configured to generate projection image data that includes a first image area corresponding to the first image data (INA) and a second image area corresponding to the second image data (INB). The second image data (INB) is at least part of image data input to a second image projection apparatus (1000-2) different from the first image projection apparatus (1000-1).

## Description

### BACKGROUND

### Technical Field

One of the aspects of the disclosure relates to an image projection apparatus (projector) for multi-projection (sometimes simply referred to as MP hereinafter).

### Description of the Related Art

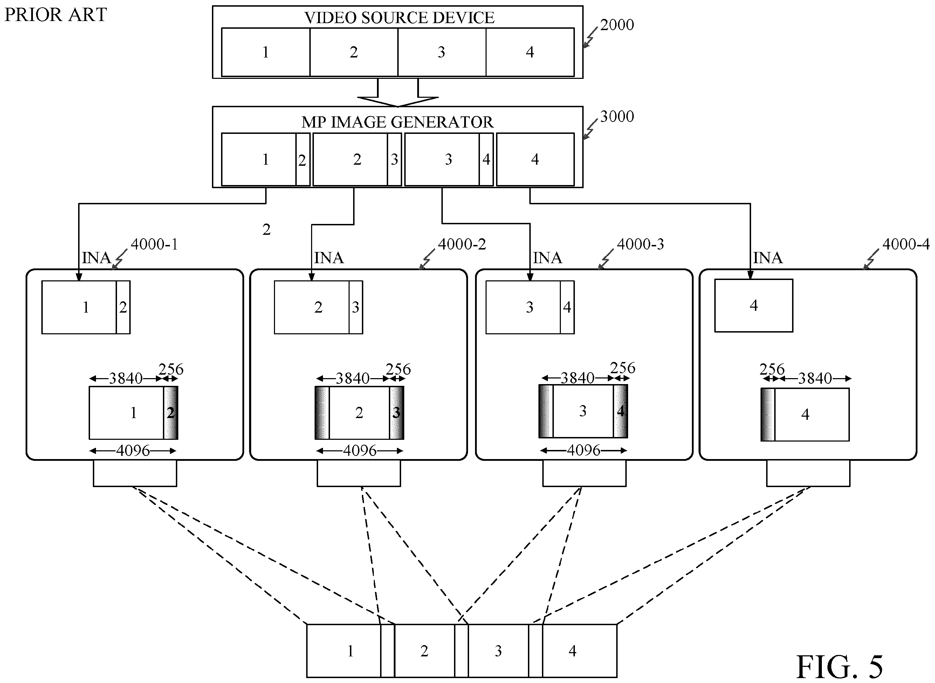

As illustrated in FIG. 5, in the conventional MP system, an MP image generator 3000 divides original image data from a video source device 2000 and generates image data to be input to each of a plurality of projectors 4000-1 to 4000-4. At this time, for edge blending, the MP image generator 3000 generates MP images in which a secondary image that corresponds to part of a primary image mainly projected by each projector is added to an edge of the primary image and is projected by a projector next to each projector. Each projector projects the secondary image (edge blended area) in the MP image at a reduced luminance such that the secondary image overlaps a corresponding area in the primary image of an adjacent projector, and thereby the seam between the projection images of adjacent projectors does not stand out. For the multi-projection with edge blending in this way, the MP image generator 3000 is necessary in addition to the video source device 2000.

Japanese Patent No. ("JP") 4472435 discloses a MP system in which a plurality of projectors share, in their image memories, original image data having the number of pixels larger than that of the projection image of the projector from a video input device. In this system, each projector cuts out image data including a secondary image through the daisy chain to generate and project an MP image.

However, as the number of pixels in the projection image increases and the image data amount that can be input to an image input unit in each projector becomes as large as the projection image amount, the MP image cannot be generated by cutting out the image data through the daisy chain unlike JP 4472435. Moreover, as the number of pixels in the projection image increases, high-performance devices become required for the video source device and the MP image generator, and they become expensive.

### SUMMARY

One of the aspects of the embodiment provides an image projection apparatus that can generate projection image data for multi-projection.

The present invention in its first aspect provides an image projection apparatus as specified in claims 1 to 10.

The present invention in its second aspect provides a multi-projection system as specified in claim 11.

The present invention in its third aspect provides an image processing method as specified in claim 12.

The present invention in its fourth aspect provides a program as specified in claim 13.

Further features of the disclosure will become apparent from the following description of embodiments with reference to the attached drawings. In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or program that, in a case where executed by the CPU, cause the CPU to perform operations corresponding to units or functions. In the hardware context, the term "unit" refers to a hardware element, a circuit, an assembly, a physical structure, a system, a module, or a subsystem. It may include mechanical, optical, or electrical components, or any combination of them. It may include active (e.g., transistors) or passive (e.g., capacitor) components. It may include semiconductor devices having a substrate and other layers of materials having various concentrations of conductivity. It may include a CPU or a programmable processor that can execute a program stored in a memory to perform specified functions. It may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

### BRIEF DESCRIPTION OF THE DRAWINGS

FIG. 1 is a block diagram illustrating a configuration of a projector according to one or more aspects of the present disclosure.
FIGs. 2A and 2B are block diagrams illustrating configurations of an input/output (I/O) unit and an image processing unit according to one or more aspects of the present disclosure.
FIG. 3 illustrates a configuration of a horizontal multi-projection (HMP) system using the projector according to one or more aspects of the present disclosure.
FIG. 4 illustrates a configuration of a horizontal and vertical multi-projection (HVMP) system using the projector according to one or more aspects of the present disclosure.
FIG. 5 illustrates a configuration of a conventional HMP system.
FIG. 6 illustrates a configuration of a conventional HVMP system.
FIGs. 7A and 7B illustrate a memory operation of an image processing unit according to one or more aspects of the present disclosure.
FIGs. 8A and 8B are timing charts illustrating display delay processing according to one or more aspects of the present disclosure.
FIG. 9 illustrates a configuration of another HMP system according to one or more aspects of the present disclosure.
FIG. 10 illustrates a configuration of an HMP system using a projector according to one or more aspects of the present disclosure.
FIG. 11 is a flowchart illustrating image projection processing according to one or more aspects of the present disclosure.
FIG. 12 is a flowchart illustrating MP setting processing according to one or more aspects of the present disclosure.
FIGs. 13A and 13B illustrate edge blending in multi-projection according to one or more aspects of the present disclosure.
FIGs. 14A to 14E illustrate an MP setting menu according to one or more aspects of the present disclosure.
FIG. 15 is a flowchart illustrating MP setting processing according to one or more aspects of the present disclosure.

### DESCRIPTION OF THE EMBODIMENTS

Referring now to the accompanying drawings, a description will be given of embodiments according to the disclosure.

### FIRST EMBODIMENT

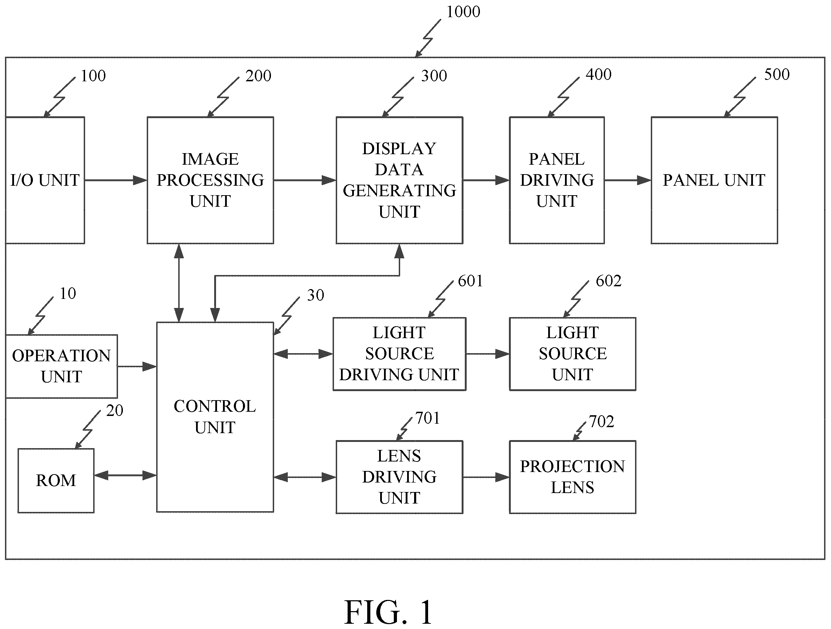

FIG. 1 illustrates a configuration of a projector as an image projection apparatus according to a first embodiment. Image data (digital image signal) given from an image signal outputting apparatus such as a personal computer (PC) is input to an input/output (I/O) unit 100. The I/O unit 100 converts image data input in a format such as HDMI (registered trademark), DVI, Displayport, or SDI into image data in a predetermined format, and outputs the format-converted image data having the input number of pixels to an image processing unit 200. The input predetermined format is, for example, full HD (1920×1080 pixels) or 4K (3840×2160 pixels, 4096×2160 pixels).

The image processing unit (generating unit) 200 includes a processor dedicated to image processing, detects the format of the input image data from the I/O unit 100, and generates projection image data by performing various image processing for the image data. More specifically, the image processing unit 200 performs resolution conversion (scaling) processing, trimming processing, on-screen display (OSD) processing for menu display, warp (keystone correction) processing, and the like. The image processing unit 200 performs the image processing after generating MP image data using first image data and second image data input from the I/O unit 100 in a case where multi-projection is performed by a plurality of projectors. The first image data, second image data, and MP image data will be described below. The projection image data that has received image processing is sent to a display data generating unit 300.

The display data generating unit 300 generates display image data (simply referred to as a display image hereinafter) to be displayed on a light modulation panel unit 500 to be described below from the projection image data or the MP image data generated by the image processing unit 200. At this time, the display data generating unit 300 performs processing (γ correction, luminance unevenness correction, and edge blending in the MP) according to the characteristic of the light modulation panel unit 500. The display data generating unit 300 outputs the generated display image to a panel driving unit 400.

A light source unit 602 is driven and turned on by a light source driving unit 601 and emits illumination light. A laser, a discharge lamp, an LED, or the like is used for the light source unit 602. The light source driving unit 601 is turned on and off and adjusts a light amount in accordance with a driving control signal from the control unit 30.

The panel driving unit 400 generates a driving signal for the light modulation panel unit 500 according to the display image generated by the display data generating unit 300 and outputs the driving signal to the light modulation panel unit 500. The light modulation panel unit 500 includes a liquid crystal panel, a digital micromirror device, or the like, and modulates the illumination light from the light source unit 602 according to the input driving signal. The light modulation panel unit 500 according to this embodiment has 4096×2400 pixels. The light modulated by the light modulation panel unit 500 is projected onto a projection surface such as a screen (not illustrated) through a projection lens 702. Thereby, the projection image is displayed. The number of pixels in the light modulation panel unit 500 and the number of pixels in the image data described in this embodiment are merely illustrative, and other numbers of pixels may be used.

The projection lens 702 performs a zoom operation that changes the size of the projection image, a shift operation that shifts the position of the projection image, and a focus operation that adjusts the focus of the projection image through a lens driving unit 701 that receives a control signal from the control unit 30.

The control unit 30 includes a computer including a central processing unit (CPU) and the like, and controls the entire projector 1000 by transmitting and receiving signals to and from the operation unit 10 and other blocks, which will be described below.

The operation unit 10 includes operation members such as a button operable by the user and a receiving unit for receiving an infrared signal from a remote controller. The operation unit 10 accepts power-on and power-off operations, a focusing operation, and setting operations of a variety of types of projection modes, and outputs an operation signal indicative of the accepted operation to the control unit 30. A ROM 20 stores data such as a variety of setting values corresponding to operation signals from the operation unit 10, a zoom position, a shift position, and focus position of the projection lens 702.

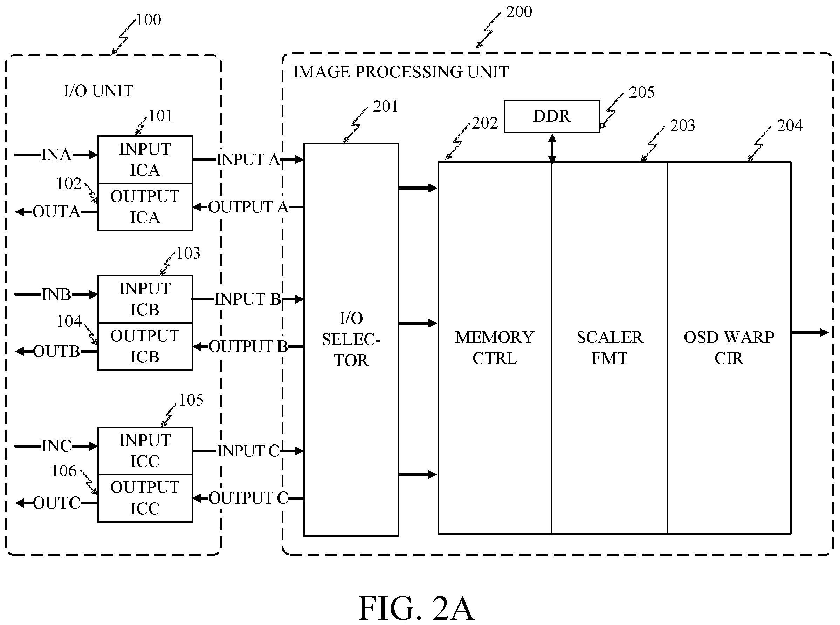

FIG. 2A illustrates a configuration example of the I/O unit 100 and the image processing unit 200. The I/O unit 100 illustrated in FIG. 2A includes a plurality of I/O systems. A first I/O system includes an input ICA 101 and an output ICA 102, a second I/O system includes an input ICB 103 and an output ICB 104, and a third I/O system includes an input ICC 105 and an output ICC 106. Each input IC can receive input (INA, INB, INC) of image data in a format such as HDMI, DVI, DisplayPort or SDI. The image processing unit 200 receives inputs (image data) A, B, and C from the input ICA 101, ICB 103, and ICC 105 in the I/O unit 100. The input ICA 101 corresponds to a first input unit, and each of the input ICB 103 and the input ICC 105 correspond to a second input unit.

An I/O selector 201 in the image processing unit 200 selects the inputs A to C to be input to a memory controller 202 in accordance with the setting by the control unit 30. The I/O selector 201 selects the same outputs A, B, and C as the inputs A, B, and C to be output to the outputs ICA 102, ICB 104, and ICC 106, respectively, in accordance with the setting by the control unit 30. The output ICA 102, ICB 104, and ICC 106 that have received the outputs A, B, and C from the I/O selector 201 output the image data as OUTA, OUTB, and OUTC.

A memory controller 202 performs a control operation for generating MP image data using the inputs A and B output from the I/O selector 201 in a case where horizontal (lateral) multi-projection is performed by connecting projection images from a plurality of projectors in a horizontal direction (lateral direction). The first image data as the input A is image data corresponding to a primary image mainly projected by the projector 1000, and the second image data as the input B is image data corresponding to the primary image mainly projected by another projector (second image projection apparatus). The MP image data includes a primary image area (first image area simply referred to as primary image hereinafter) corresponding to the first image data, and a secondary image area (second image area simply referred to as secondary image hereinafter) corresponding to part of the second image data that contacts an edge in a horizontal direction of the primary image. Part of the secondary image in the projection image becomes an edge portion that overlaps an adjacent projection image in the edge blending.

In a case where vertical (longitudinal) multi-projection is performed by connecting projection images from a plurality of projectors in a vertical direction (longitudinal direction), the memory controller 202 performs a control operation for generating MP image data using the inputs A and C output from the I/O selector 201. The second image data as the input C is image data corresponding to an image mainly projected by still another projector. The MP image data in this case includes a primary image corresponding to the first image data, and a secondary image corresponding to part of the second image data that contacts an edge in the vertical direction of the primary image.

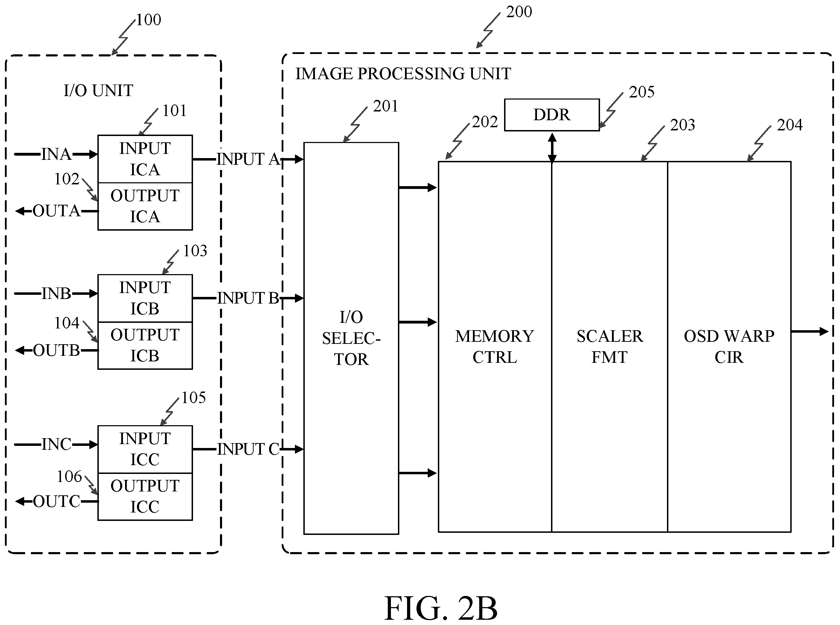

FIG. 2B illustrates a configuration in which the I/O unit 100 is different from that of the configuration illustrated in FIG. 2A, and the same outputs A, B, and C as the inputs A, B, and C are output to the outputs ICA 102, ICB 104, and ICC 106, respectively. The output ICA 102, ICB 104, and ICC 106 receive the image data output from the input ICA 102, ICB 104, and ICC 106, respectively, and output the image data as OUTA, OUTB, and OUTC without the intervention of the I/O selector 201. The following description is directed to the configuration illustrated in FIG. 2A.

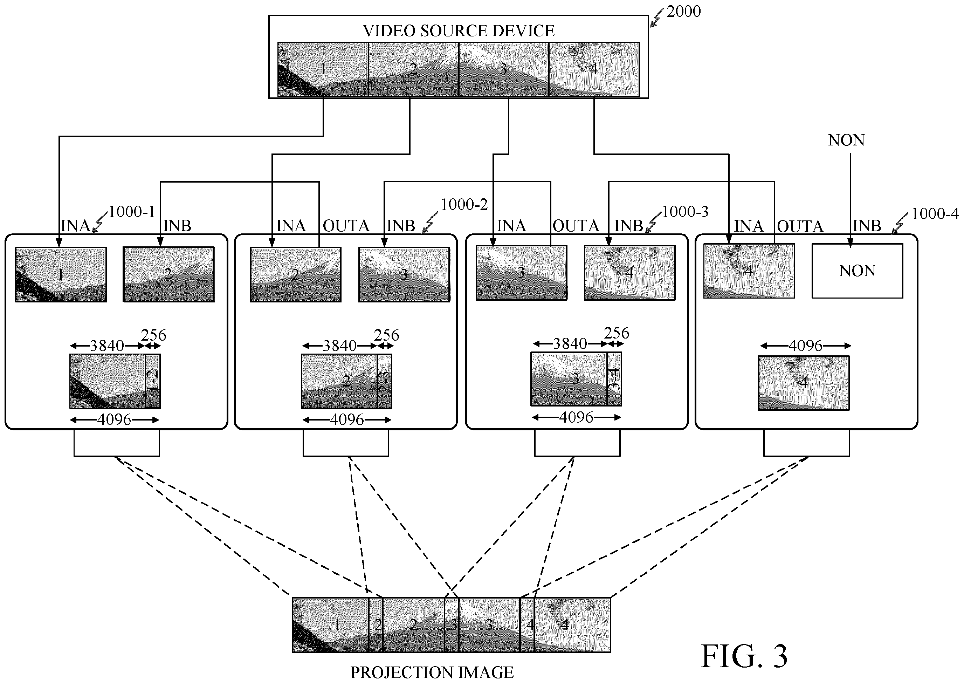

FIG. 3 illustrates an example of an HMP system according to this embodiment. This system includes a video source device 2000 as an image signal outputting apparatus and projectors 1000-1 to 1000-4, and does not have the MP image generator 3000 illustrated in FIG. 5. Each of the projectors 1000-1, 1000-2, and 1000-3 corresponds to the first image projection apparatus, and each of the projectors 1000-2, 1000-3, and 1000-4 corresponds to the second image projection apparatus.

The image data (image signal) output from the video source device 2000 to each projector is, for example, 4K (3840×2160 pixels) image data in which the original image data of 15360×2160 pixels is divided into four in the horizontal direction. Image data 1 to 4 are input as INA to the I/O units 100 in the projectors 1000-1 to 1000-4, respectively. Image data 2, 3, and 4 output as OUTA from the I/O units 100 in the projectors 1000-2 to 1000-4 are input as INB to the I/O units 100 in the projectors 1000-1 to 1000-3, respectively.

The image processing unit 200 in the projector 1000-1 generates MP image data (4096×2160 pixels) in which a secondary image 1-2 corresponding to part (256×2160 pixels) on the left end side of the image data 2 is added to the right end of the primary image (3840×2160 pixels) 1 corresponding to the image data 1. Similarly, the image processing unit 200 in the projector 1000-2 generates MP image data in which a secondary image 2-3 corresponding to part on the left end side of the image data 3 is added to the right end of the primary image 2 corresponding to the image data 2. The image processing unit 200 in the projector 1000-3 generates MP image data in which a secondary image 3-4 corresponding to part on the left end side of the image data 4 is added to the right end of the primary image 3 corresponding to the image data 3. The image processing unit 200 in the projector 1000-4 generates MP image data (4096×2160 pixels) corresponding to the image data 4.

The MP image data generated by the projectors 1000-1 to 1000-3 correspond to first projection image data. The MP image data generated by the projectors 1000-2 to 1000-4 corresponds to second projection image data for the MP image data generated by the projectors 1000-1 to 1000-3.

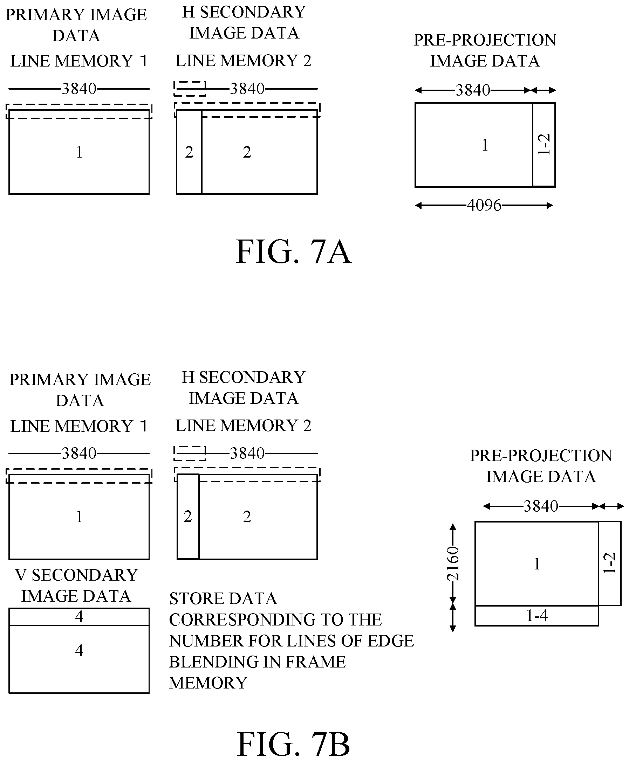

In the projector 1000-1, the I/O selector 201 inputs to the memory controller 202 the input A from the input ICA 101 that has received INA and the input B from the input ICB 103 that has received INB. As illustrated in FIG. 7A, the memory controller 202 transfers primary image data 1, which is the first image data as the input A, to the line memory 1, and transfers secondary horizontal (sometimes simply referred to as HS hereinafter) image data 2, which is the second image data as the input B, to the line memory 2. Next, the memory controller 202 sequentially reads the secondary horizontal image data written in the line memory 2 following the primary image data written in the line memory 1, and writes it in a DDR 205, which is a frame memory illustrated in FIG. 2A. More specifically, the memory controller 202 reads the image data (4096 pixels) obtained by adding the secondary horizontal image data (256 pixels) of the line memory 2 to the primary image data (3840 pixels) of the line memory 1 and writes it in the DDR 205. The memory controller 202 repeatedly reads the horizontal primary image data and secondary horizontal image data for one line and writes it in the DDR 205 for 2160 lines in the vertical direction. Thereby, pre-projection image data (that is, MP image data) having the primary image (1) and secondary horizontal images (1-2) is generated and written in the DDR 205 as illustrated in FIG. 7A.

The pre-projection image data written in the DDR 205 is enlarged or reduced by a scaler formatter 203 and converted into image data in a predetermined format (4096 horizontal pixels × 2400 vertical pixels). At this time, since the pre-projection image data has 2160 vertical pixels relative to 2400 vertical pixels of the predetermined format, the upper and lower 120 lines are blank image data such as black. A warp circuit 204 performs correction including keystone correction that deforms the image shape for the image data converted into the predetermined format, and outputs the corrected image data. In this embodiment, since the number of pixels of the light modulation panel unit 500 is 4096 horizontal pixels and 2400 vertical pixels, image data of 4096 horizontal pixels and 2400 vertical pixels is output from the image processing unit 200 as optimal image data for this number of pixels.

While this example uses the line memory for the input to the DDR, each of the primary image data and the secondary horizontal image data may be once written in the frame memory as the DDR, and the written data may be written in the memories 1 and 2 as in FIG. 7A in the readout.

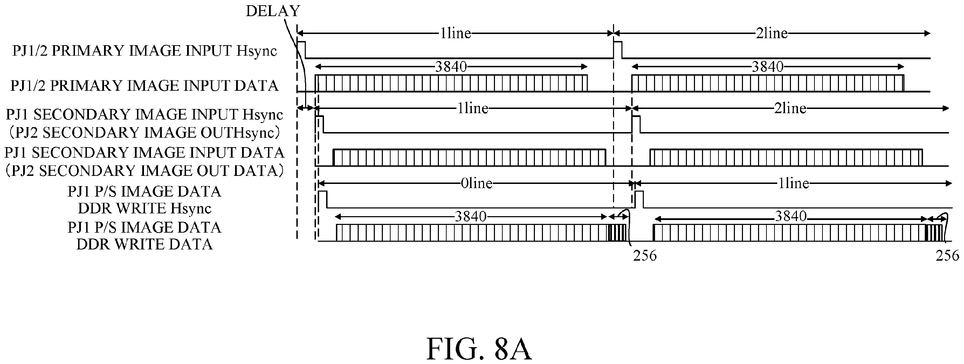

FIG. 8A illustrates input/output timings of image data and write timings in the DDR 205 in the projector 1000-1 (PJ1) and the projector 1000-2 (PJ2). Image data input from the video source device 2000 to PJ1 and PJ2 are synchronized in timing within the video source device 2000.

Primary image data (PJ1/PJ2 primary image input data) are input to PJ1 and PJ2 at a timing in synchronization with primary image input Hsync (horizontal synchronization signal). PJ2 primary image input data input to PJ2 via the input ICA illustrated in FIG. 2A is output as PJ2 secondary image OUT data (OUTA) via the I/O selector 201 and output ICA 103. PJ2 secondary image OUT data is input to PJ1 as PJ1 secondary image input data (INB) together with PJ1 secondary image input Hsync and input to the I/O selector 201.

At this time, in PJ2, the PJ2 secondary image OUT data is output at a timing delayed from the PJ1/PJ2 primary image input data as illustrated in FIG. 8A due to the influence of the intervention of the I/O selector 201 and the output ICA 102, and is input as the PJ1 secondary image input data to PJ1. Therefore, the memory controller 202 in PJ1 writes the same frame of PJ1 primary image input data and PJ1 secondary image input data in the line memory (DDR 205) at different timings. In order to match these delayed timings, the memory controller 202 first writes data corresponding to 3840 horizontal pixels (PJ1 primary image data) of the PJ1 primary image input data in the line memory. Thereafter, at a delayed timing, the data corresponding to the 256 horizontal pixels of the PJ1 secondary image input data (PJ1 secondary image data) following the data corresponding to the 3840 horizontal pixels of the PJ1 primary image data is written in the line memory. Thus, the PJ1 primary image data and the PJ1 secondary image data are written in the DDR 205 while the delay of the PJ1 secondary image input data from the PJ1 primary image input data is absorbed. In PJ1, the PJ1 primary and secondary (P/S) image input data read out of the DDR 205 are processed by the scaler formatter 203 and MP image data of 4096 horizontal pixels and 2400 vertical pixels is generated.

PJ2 and the projector 1000-3 (PJ3) also generate MP image data through input/output of image data and writing in the DDR 205 as in PJ1. The projector 1000-4 (PJ4) generates MP image data (but not including secondary image) corresponding to PJ4 primary image data input as INA.

Thus, MP image data of 2400 vertical pixels is generated for the 2400 vertical pixels of the light modulation panel unit 500. At this time, the scaler formatter 203 outputs image data dot by dot to an OSD warp circuit without scaling each projection image data by setting to black an area of 120 pixels above and below the center of the light modulation panel unit 500. The OSD warp circuit performs correction in the warp circuit 204 including keystone correction for deforming the projection image, and outputs the projection image data to the display data generating unit 300. Image data may be disposed above or below the light modulation panel unit 500.

The number of pixels of the primary image data (3840 pixels), the number of pixels of the secondary horizontal image data (256 pixels), and the number of pixels of the projection image data (4096 pixels) are merely illustrative and may be the different numbers of pixels. In a case where the number of pixels of the primary image data is larger than the maximum number of pixels of the projection image data, the scaler formatter 203 may scale down the primary image and the secondary image data so that the number of pixels in a combination of the primary image data and the secondary image data can be the maximum number of pixels of the projection image data. In a case where the number of pixels of the primary image data is smaller than the maximum number of pixels in the projection image data, the scaler formatter 203 may scale up the primary image and secondary image data so that the number of pixels of the combination of the primary image data and the secondary image data can be the maximum number of pixels of the projection image data. In a case where the number of pixels of the combination of the primary image data and the secondary image data is equal to the maximum number of pixels of the projection image data, the scaler formatter 203 may output them dot by dot without scaling up and down.

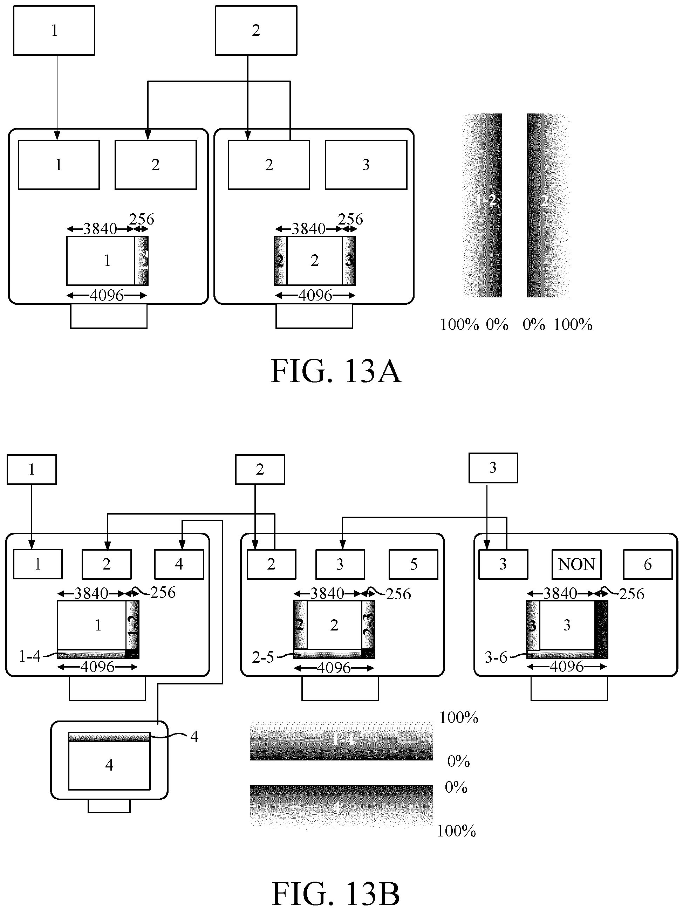

The projectors 1000-1 to 1000-4 project and display the projection image corresponding to the MP image data generated by them, respectively, as illustrated in FIG. 3. At this time, the display data generating units 300 in the projectors 1000-1 to 1000-4 perform edge blending for the MP image data. As illustrated in FIG. 13A, the edge blending in the projector 1000-1 is processing that sets the gain at the left end of the secondary image 1-2 to 100%, and gradually decreases the gain down to 0% toward the right end (that is, reduces the brightness (or luminance)).

The edge blending in the projector 1000-2 is processing that sets the gain at the left end of the primary image 2 to 0%, and gradually increases the gain up to 100% toward the right end of an area which the secondary image 1-2 of the primary image 2 overlaps. Other edge blending in the projector 1000-2 is processing that sets the gain at the left end of the secondary image 2-3 to 100% and gradually decreases the gain to 0% toward the right end. The edge blending in the projector 1000-3 is similar to that of the projector 1000-2.

The edge blending in the projector 1000-4 is processing that sets the gain at the left end of the primary image 4 to 0%, and gradually increases the gain to 100% toward the right end of an area which the secondary image 3-4 of the primary image 4 overlaps.

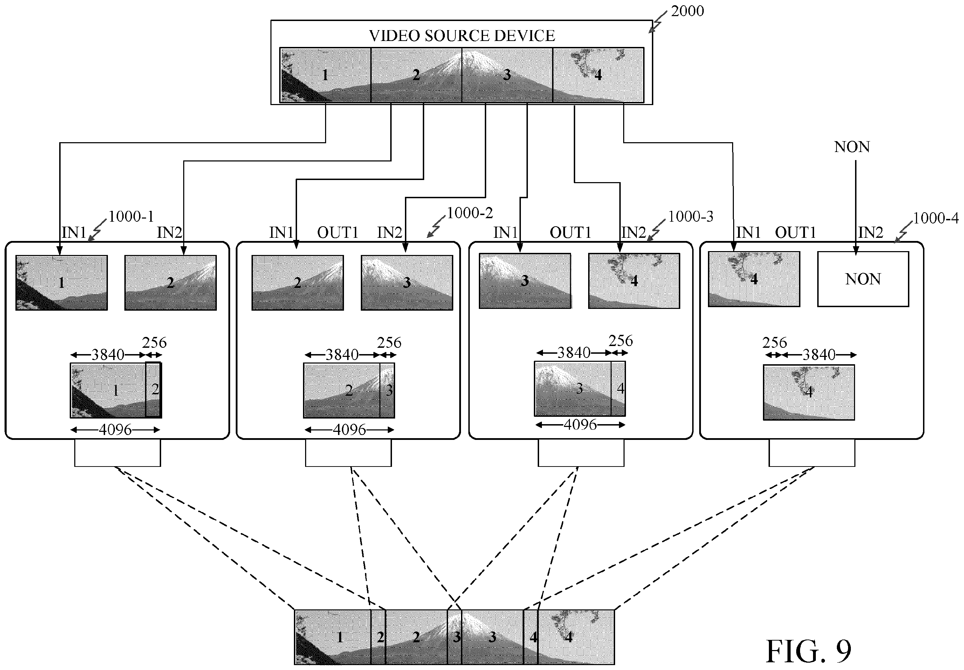

In this embodiment, the projectors 1000-1 to 1000-3 receive the secondary image data from the adjacent projectors and generate MP image data including the primary and secondary images. Alternatively, as illustrated in FIG. 9, in a case where the video source device 2000 can output the primary image data and secondary image data to each projector, each of the projectors 1000-1 to 1000-3 may receive the secondary image data directly from the video source device 2000. Although not illustrated, each of the projectors 1000-1 to 1000-3 may receive the primary image data and secondary image data via an unillustrated distributor connected to the video source device 2000. This is similarly applicable to the HVMP system described below.

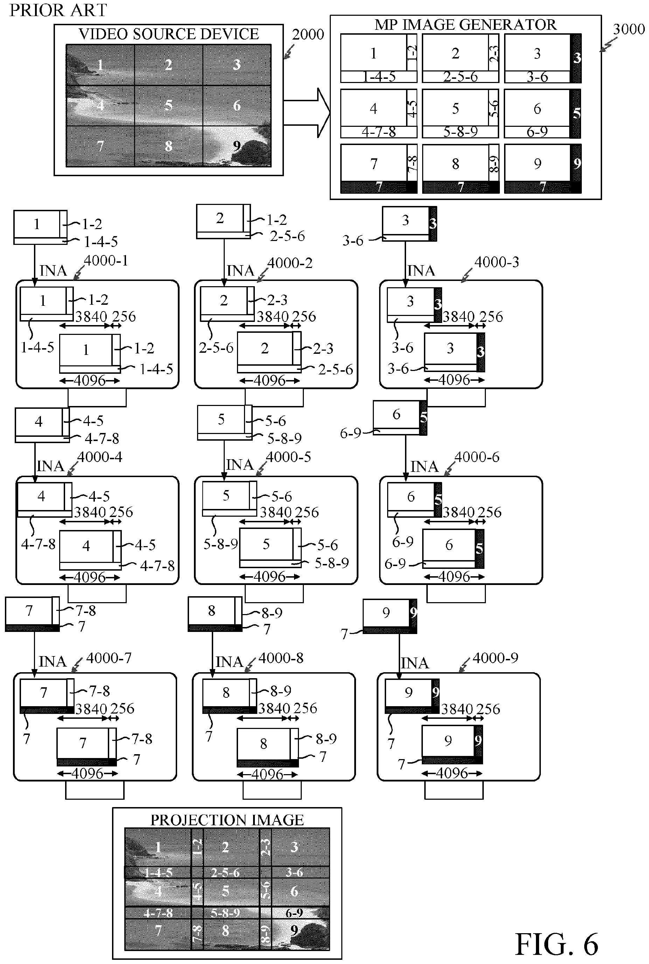

FIG. 6 illustrates the configuration of the conventional HVMP system. Nine projectors 4000-1 to 4000-9 project projection images of 3 horizontal images × 3 vertical images so that they partially overlap each other. The MP image generator 3000 to which the original image data is input from the video source device 2000 sends MP image data that includes at least one of primary images (1 to 8), secondary horizontal (SH) images (1-2, 2-3, and the like), and secondary vertical (SV) images (1-4-5, 2-5-6, and the like) for the eight projectors 4000-1 to 4000-8. Part (1-4-5) of the secondary vertical image in the projection image (such as 1) is an edge portion that overlaps not only the projection image (4) adjacent to and below it but also the projection image (5) adjacent to and on the right side of it. The MP image generator 3000 generates MP image data of only the primary image (9) for the remaining one projector 4000-9.

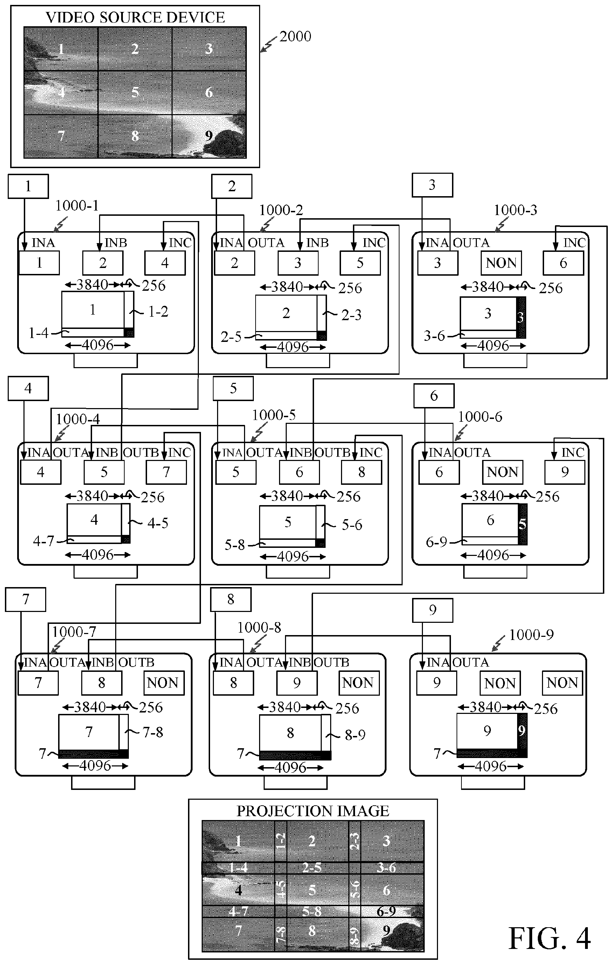

On the other hand, the HVMP system according to this embodiment illustrated in FIG. 4 includes the video source device 2000 and the projectors 1000-1 to 1000-9, and does not have the MP image generator 3000 illustrated in FIG. 6.

The image data output from the video source device 2000 to each projector is, for example, 4K (3840×2160 image data) in which the original image data of 11520×6480 pixels is divided into 3 horizontal images × 3 vertical images. Image data 1 to 9 are input as INA to the I/O units 100 in the projectors 1000-1 to 1000-9. Image data 2, 3, 5, 6, 8, and 9 output as OUTA from the I/O units 100 in the projectors 1000-2, 1000-3, 1000-5, 1000-6, 1000-8, and 1000-9 to the I/O units 100 in the projectors 1000-1, 1000-2, 1000-3, 1000-4, 1000-5, 1000-7, and 1000-8, respectively. Image data 4 to 9 output as OUTA from the I/O units 100 in the projectors 1000-4, 1000-5, 1000-6, 1000-7, 1000-8, and 1000-9 are input as INC to the I/O units 100 in the projectors 1000-1, 1000-2, 1000-3, 1000-4, 1000-5, and 1000-6, respectively.

The image processing unit 200 in the projector 1000-1 adds a secondary image 1-2 corresponding to part (256×2160 pixels) on the left side of the image data 2 to the right end of the primary image (3840×2160 pixels) 1 corresponding to the image data 1. The image processing unit 200 adds a secondary image (1-4) corresponding to part (3840×240 pixels) on the upper end side of the image data 4 to the lower end of the primary image1. The MP image data is thus generated. The image processing units 200 in the projectors 1000-2, 1000-4, and 1000-5 similarly generate MP image data including secondary images at the right and bottom ends. The image processing units 200 in the projectors 1000-2, 1000-4, and 1000-5 also generate MP image data including a secondary image at the right and lower ends. The image processing units 200 in the projectors 1000-3 and 1000-6 generate MP image data including a secondary image at the lower end. The image processing units 200 in the projectors 1000-7 and 1000-8 generate MP image data including a secondary image at the right end. The image processing unit 200 in the projector 1000-9 generates MP image data of only the primary image.

In the projector 1000-1, the I/O selector 201 inputs the input A from the input ICA 101 that has received INA, the input B from the input ICB 103 that has received INB, and the input C from the input ICC 105 that has received INC in the memory controller 202. The memory controller 202 writes the primary image data (1) as the input A in the line memory 1 and secondary horizontal image data (2) as the input B in the line memory 2, as illustrated in FIG. 7B. Next, the memory controller 202 sequentially reads the secondary horizontal image data written in the line memory 2 following the primary image data written in the line memory 1 and writes it in the DDR 205. The memory controller 202 writes the secondary vertical image data 4 as the input C in the DDR 205. Writing of the primary image data and the secondary vertical image data in the DDR 205 is performed at approximately the same frame timing. The memory controller 202 repeatedly reads out the image data including the primary image data and the secondary horizontal image data in the horizontal direction for 2160 lines in the vertical direction and writes the result in the DDR 205.

The memory controller 202 reads the image data (1-4) for a predetermined number of lines (240 lines) of the secondary vertical image data from the DDR 205. The read secondary vertical image data (1-4) is added to the primary image data. Thereby, the pre-projection image data (MP image data) having the primary image (1), the secondary horizontal image (1-2), and the secondary vertical image (1-4) is generated and written in DDR 205. The pre-projection image data is image data of 4096 horizontal pixels × 2400 vertical pixels.

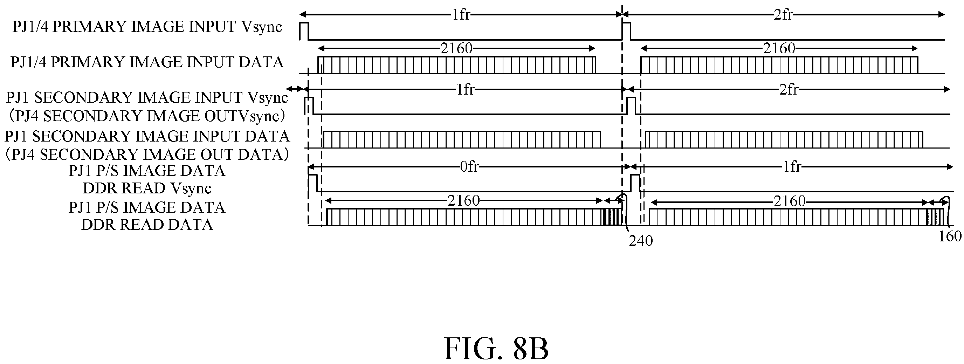

FIG. 8B illustrates input/output timings of image data and write timings in the DDR 205 in the projector 1000-1 (PJ1) and the projector 1000-4 (PJ4). Image data input from the video source device 2000 to PJ1 and PJ4 are synchronized in timing within the video source device 2000. The input/output timings of image data and write timings in the DDR 205 in PJ1 and PJ2 are similar to those described with reference to FIG. 8A.

The primary image data (PJ1/PJ4 primary image input data) are input to PJ1 and PJ4 at timings in synchronization with the primary image input Vsync (vertical synchronization signal). PJ4 primary image input data input to PJ4 via the input ICA illustrated in FIG. 2A is output as PJ4 secondary image OUT data (OUTA) via I/O selector 201 and output ICA 103. The PJ4 secondary image OUT data is input to the I/O selector 201 as PJ1 secondary image input data (INC) together with the PJ1 secondary image input Hsync.

At this time, in PJ4, the PJ4 secondary image OUT data is input to PJ1 as PJ1 secondary image input data at a timing delayed from the PJ1/PJ4 primary image input data. The memory controller 202 in PJ1 writes the same frame (or a predetermined area) of the PJ1 primary image input data and the PJ1 secondary image input data in the line memory (DDR 205) at the delayed timing. At the timing of the next and subsequent frames, data corresponding to 2160 lines of PJ1 primary image data out of the PJ1 primary image input data and data corresponding to 240 lines of PJ1 secondary image data out of the PJ1 secondary image input data are output to the scaler formatter 203. The MP image data is thus output via the scaler formatter 203 and the warp circuit 204.

The projectors 1000-2, 1000-3, 1000-4, 1000-5, and 1000-6 also generate the MP image data through input/output of image data and writing in the DDR 205 similar to PJ1. However, the projectors 1000-3 and 1000-6 do not handle secondary horizontal image data. The projectors 1000-7 and 1000-8 generate MP image data through input/output of image data and writing in the DDR 205 similar to PJ1 described in FIG. 8A. The projector 1000-9 generates MP image data (but not including the secondary image) corresponding to the primary image data.

The projectors 1000-1 to 1000-9 project and display projection images corresponding to the MP image data generated by them, respectively, as illustrated in FIG. 4. At this time, the display data generating units 300 in the projectors 1000-1 to 1000-9 perform edge blending for the MP image data. The edge blending in the projector 1000-1 is, as illustrated in FIG. 13B, processing that sets the gain at the left end of the secondary horizontal image 1-2 to 100% and gradually decreases the gain to 0% toward the right end. Other edge blending in the projector 1000-1 is processing that sets the gain at the upper end of the secondary vertical image 1-4 to 100% and gradually decreases the gain to 0% toward the lower end. The edge blending in the projector 1000-4 is similar to that of the projector 1000-1.

The edge blending in the projector 1000-2 is processing that sets the gain at the left end of the primary image 2 to 0% and gradually increases the gain to 100% toward the right end of the area of the primary image 2 which the secondary image1-2 overlaps. The second edge blending in the projector 1000-2 is processing that sets the gain at the left end of the secondary image 2-3 to 100% and gradually decreases the gain to 0% toward the right end. The third edge blending in the projector 1000-2 is processing that sets the gain at the upper end of the secondary image 2-5 to 100% and gradually decreases the gain to 0% toward the lower end. The edge blending in the projector 1000-5 is similar to that of the projector 1000-2.

The edge blending in the projector 1000-3 is processing that sets the gain at the left end of the primary image 4 to 0% and gradually increases the gain to 100% toward the right end of the area which the secondary images 2-3 of the primary image 4 overlaps. Other edge blending in the projector 1000-3 is processing that sets the gain at the upper end of the secondary image 3-6 to 100% and gradually decreases the gain to 0% toward the lower end. The edge blending in the projector 1000-6 is similar to that of the projector 1000-3.

The edge blending in the projector 1000-7 is processing that sets the gain at the left end of the secondary horizontal image 7-8 to 100% and gradually decreases the gain to 0% toward the right end. The edge blending in the projector 1000-8 is processing that includes the edge blending of the projector 1000-7, further sets the gain at the left end of the primary image 8 to 0%, and increases the gain to 100% towards the right end of an area which the secondary image 2-3 of the primary image 8 overlaps.

The edge blending in the projector 1000-9 is processing that sets the gain at the left end of the primary image 9 to 0% and gradually increases the gain to 100% toward the right end of an area which the secondary images 8-9 of the primary image 9 overlap.

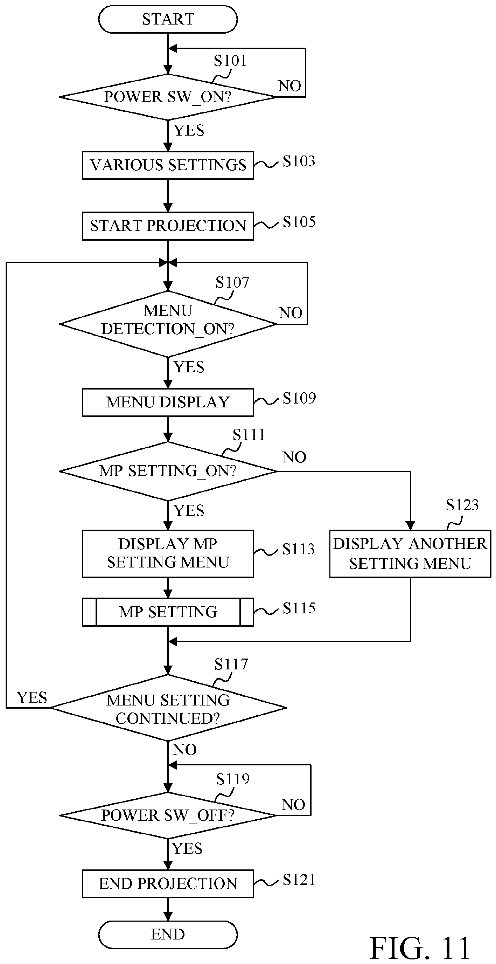

A flowchart of FIG. 11 illustrates image projection processing executed by the control unit 30 in the projector 1000-1 as the main projector. The control unit 30, which is a computer, executes this process according to a program. First, in step S101, the control unit 30 determines whether the power switch of the projector 1000 is turned on or off, and in a case where it is turned on, the flow proceeds to step S103.

In step S103, the control unit 30 makes a variety of types of settings for image projection to the I/O unit 100, the image processing unit 200, and the display data generating unit 300 based on the various setting data stored in the ROM 20. In a case where the variety of types of settings are completed, the flow proceeds to step S105 to start image projection.

In step S107, the control unit 30 determines whether or not an operation signal from the operation unit 10 has been detected. In a case where the operation signal has been detected, the flow proceeds to step S109 to display a menu using the OSD.

In step S111, the control unit 30 determines whether or not the user has selected MP setting from the menu. If the MP setting has not been selected, the flow proceeds to step S123 to display a menu for another setting using the OSD, and the flow proceeds to step S117. On the other hand, in a case where the MP setting has been selected, the flow proceeds to step S113 to display a MP setting menu through the OSD, and enters MP setting processing in step S115. The MP setting processing will be described below.

In a case where the flow proceeds from step S115 or step S123 to step S 117, the control unit 30 determines whether or not to continue menu setting, and in a case where it is determined that the setting is to be continued, the flow returns to step S107. In a case where it is determined that the setting is not to be continued, the flow proceeds to step S119 to determine whether the power switch has been turned off. When the power switch is turned off, the flow proceeds to step S121 to end the image projection and this processing.

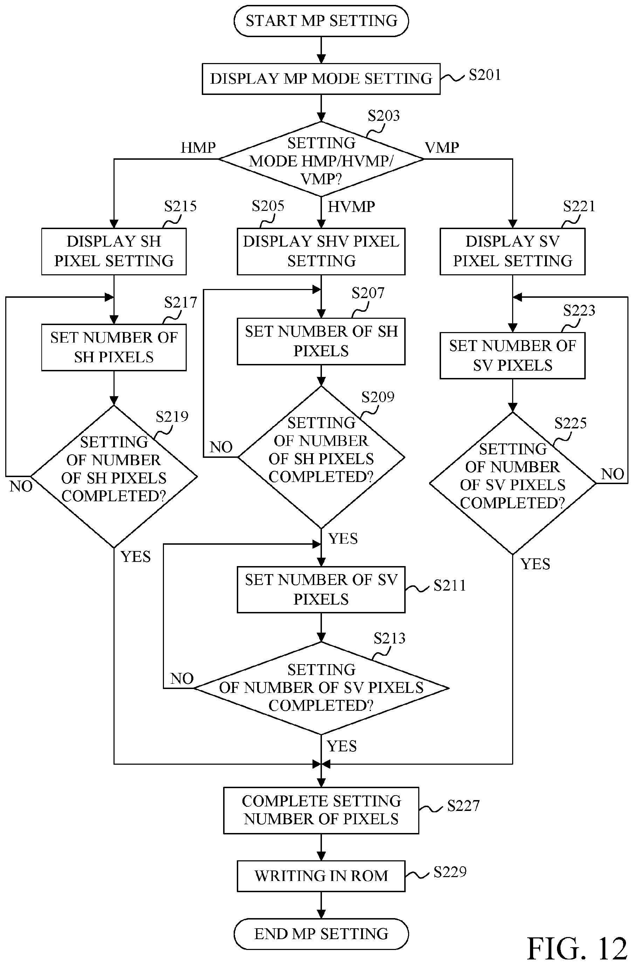

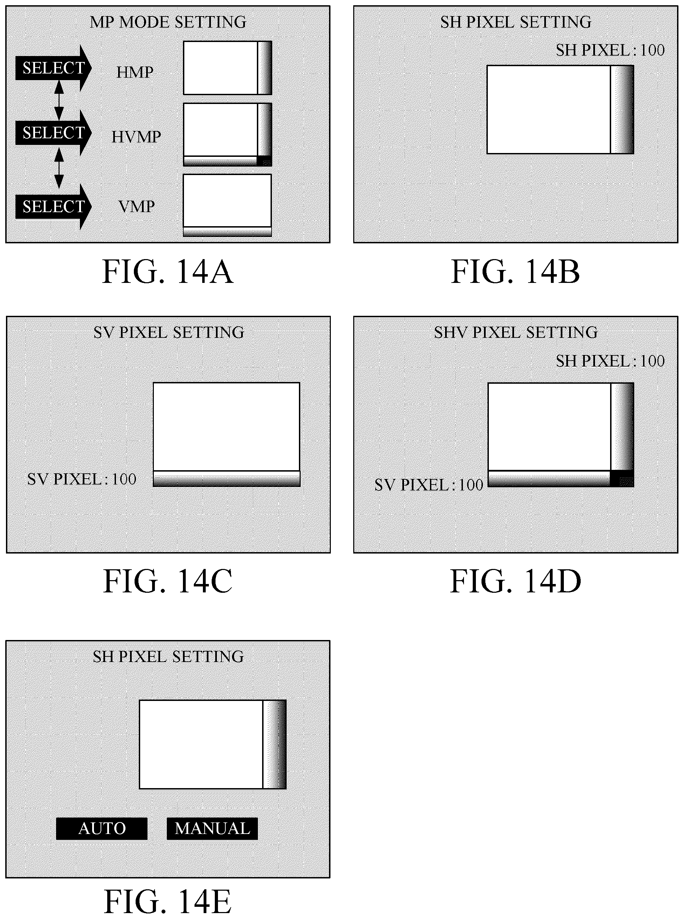

A flowchart of FIG. 12 illustrates MP setting processing executed by the control unit 30 in step 5115 of FIG. 11. After starting the MP setting processing, the control unit 30 provides a display for allowing the user to set (select) the MP mode in step S201. More specifically, as illustrated in FIG. 14A, the MP mode display allows the user to select any one of a HMP mode, a HVMP mode, and a VMP mode. The MP mode is selected by the user moving a "select" arrow in FIG. 14A up and down through the operation unit 10.

In a case where HMV is selected as the MP mode in step S203, the flow proceeds to step S215 to display the secondary horizontal (HP) pixel setting as illustrated in FIG. 14B. In FIG. 14B, a white area represents a primary image and a gradation area represents a secondary horizontal image. The user selects the number of horizontal pixels of the secondary horizontal image (for example, 100) while viewing the display, and the control unit 30 sets the number of horizontal pixels of the secondary horizontal image according to the selection in step S217. In step S219, the control unit 30 determines whether or not the setting of the number of horizontal pixels of the secondary horizontal image by the user has been completed. In a case where the setting has not yet been completed, the flow returns to step S217. In a case where the setting has been completed, the flow proceeds to step S227.

In a case where VMP is selected as the MP mode, the flow proceeds to step S221 to display secondary vertical (SV) pixel setting as illustrated in FIG. 14C. In FIG. 14C, a white area represents a primary image and a gradation area represents a secondary vertical image. The user selects the number of vertical pixels of the secondary vertical image (for example, 100) while viewing the display, and the control unit 30 sets the number of vertical pixels of the secondary vertical image according to the selection in step S223. In step S225, the control unit 30 determines whether or not the user has completed setting the number of vertical pixels of the secondary vertical image. In a case where the setting has not yet been completed, the flow returns to step S223. In a case where the setting has been completed, the flow proceeds to step S227.

In a case where HVMP is selected as the MP mode, the control unit 30 proceeds to step S205, and performs the secondary HV pixel setting display as illustrated in FIG. 14D. In FIG. 14D, a white area represents a primary image, and a gradation area represents a secondary horizontal image and a secondary vertical image. While viewing the display, the user selects the number of horizontal pixels of the horizontal image and the number of vertical pixels of the secondary vertical image. In step S207, the control unit 30 sets the number of horizontal pixels of the secondary horizontal image according to the selection. In step S209, it is determined whether or not the setting of the number of horizontal pixels of the secondary horizontal image by the user has been completed. If the setting has not yet been completed, the flow returns to step S207. If the setting has been completed, the flow proceeds to step S211. In step S211, the control unit 30 sets the number of vertical pixels of the secondary vertical image according to the selection of the user. In step S213, it is determined whether or not the user has completed setting the number of vertical pixels of the secondary vertical image. If the setting has not yet been completed, the flow returns to step S211. If the setting has been completed, the flow proceeds to step S227.

In step S227, the control unit 30 sets the number of pixels set in steps S217 and S223, or S207 and S211 to the image processing unit 200, and writes the number of pixels in the ROM 20 in the next step S229.

This embodiment can provide a projector that can generate MP image data. Therefore, multi-projection with edge blending can be performed without using a multi-projection image generator.

The secondary image data input from the adjacent projector or video source device in each projector may be part of the primary image data in the adjacent projector (part added as the secondary image to the primary image).

### SECOND EMBODIMENT

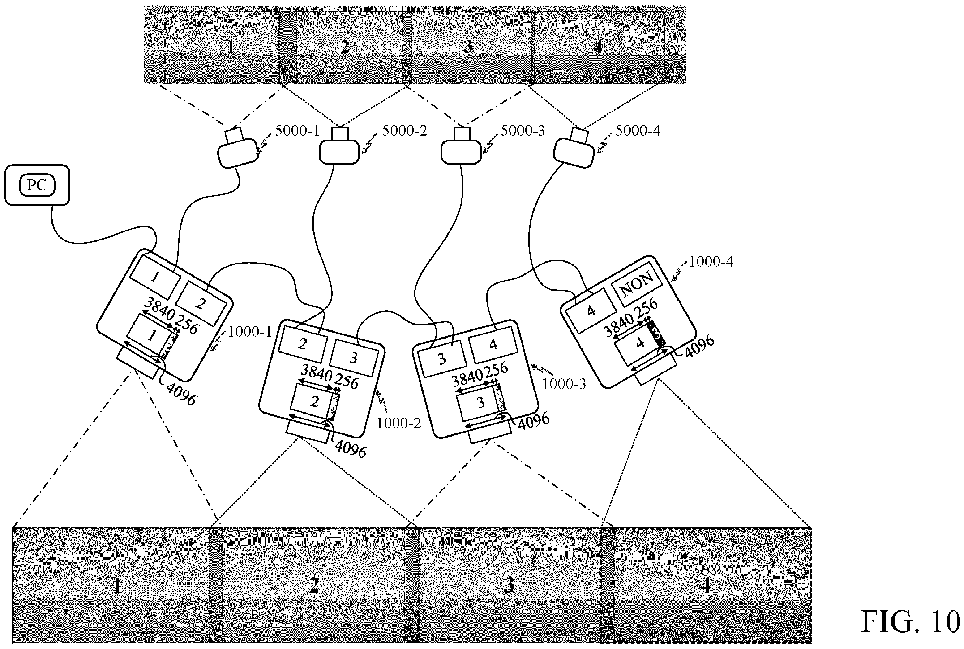

FIG. 10 illustrates a configuration of a MP system according to a second embodiment. Projectors 1000-1 to 1000-4 are projectors similar to those of the HMP system according to the first embodiment. The MP system according to this embodiment inputs, as primary image data (1 to 4), captured image data from four cameras 5000-1 to 5000-4 for imaging an object such as a landscape to the corresponding projectors 1000-1 to 1000-4 via an HDMI, SDI, or IP transmission. Secondary horizontal image data (2 to 4) are input to the projectors 1000-1 to 1000-3 from the projectors 1000-2 to 1000-4, respectively.

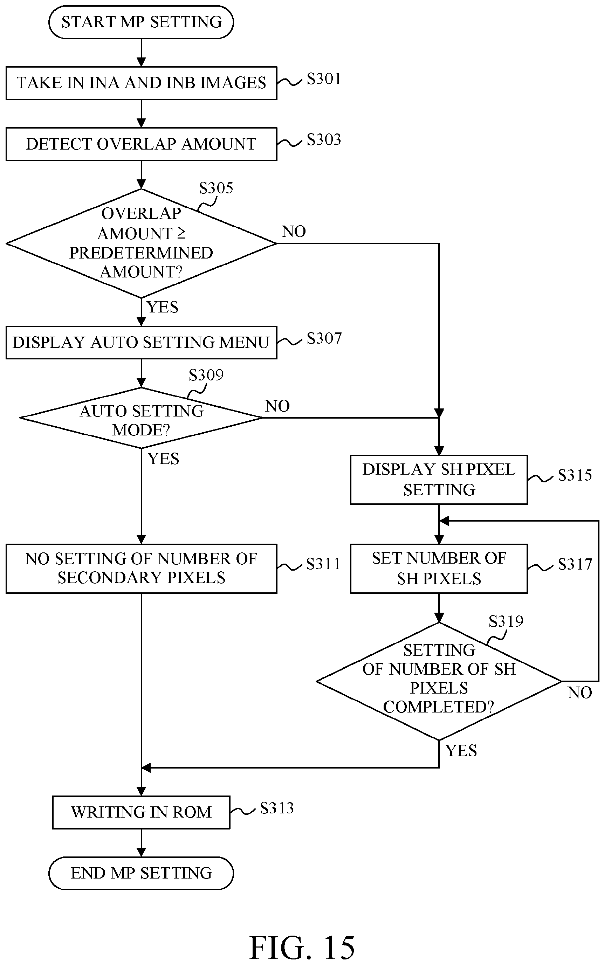

The image projection processing executed by the projector 1000-1 (control unit 30) as the main projector is the same as that illustrated in FIG. 11. A flowchart of FIG. 15 illustrates MP setting processing according to this embodiment.

In step S301, the control unit 30 causes the DDR 205 to take in the primary image data input to INA and the SH image data input to INB at the same timing.

In step S303, the control unit 30 compares the primary image data and the SH image data taken in the DDR 205, and identifies the same image area, that is, an overlap area. The control unit 30 detects the number of horizontal pixels (overlap amount) in the overlap area. In the projector 1000-1, the overlap area occurs only if the imaging ranges of the camera 5000-1 and the camera 5000-2 partially overlap each other.

In step S305, the control unit 30 determines whether or not the overlap amount is equal to or larger than a predetermined amount (for example, 10% of the primary image). In a case where the overlap amount is smaller than the predetermined amount, the flow proceeds to S315, and in a case where the overlap amount is equal to or larger than the predetermined amount, the flow proceeds to S307.

In steps S315 and S317, for a small overlap amount, the control unit 30 causes the user to select the number of horizontal pixels of the SH image, as in steps S215 and S217 of FIG. 12, and set it. In a case where the setting of the SH image has been completed in step S319, the flow proceeds to step S313.

On the other hand, in step S307, the control unit 30 causes the OSD to display a menu for allowing the user to select one of the automatic setting and the manual setting of the number of SH pixels of the secondary horizontal image as illustrated in FIG. 14E. In step S309, the control unit 30 determines whether or not the automatic setting has been selected. If the automatic setting has been selected, the flow proceeds to step S311.

Here, as illustrated in FIG. 10, in a case where there is a sufficient overlap amount between the projection image (1) of the projector 1000-1 and the projection image (2) of the projector 1000-2, it is unnecessary to generate MP image data in which the secondary image data is added to the primary image data. Therefore, in step S311, the control unit 30 sets no setting of the number of horizontal pixels of the SH image and causes the image processing unit 200 to generate MP image data having only the primary image.

On the other hand, if there is a sufficient overlap amount between the projection image (1) of the projector 1000-1 and the projection image (2) of the projector 1000-2 but the manual setting has been selected in step S307, the flow proceeds to step S315 to cause the user to select the number of horizontal pixels of the secondary horizontal image.

In step S313, the control unit 30 writes no setting of step S311 or the number of horizontal pixels set in step S317 in the ROM 20, and ends this processing.

The above embodiment can provide an image projection apparatus that can generate projection image data for multi-projection.

### OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disk (such as a compact disc (CD), digital versatile disc (DVD), or Blu-ray Disc (BD)^{™}), a flash memory device, a memory card, and the like.

While the disclosure has been described with reference to embodiments, it is to be understood that the disclosure is not limited to the disclosed embodiments. The scope of the following claims is to be accorded the broadest interpretation so as to encompass all such modifications and equivalent structures and functions.

## Claims

1. An image projection apparatus as a first image projection apparatus (1000-1, 1000-2, 1000-3) configured to project an image, the image projection apparatus comprising:
a first input unit (101) into which first image data is input;
a second input unit (105) into which second image data is input; and
a generating unit (200) configured to generate projection image data that includes a first image area corresponding to the first image data and a second image area corresponding to the second image data,
wherein the second image data is at least part of image data input to a second image projection apparatus (1000-2, 1000-3, 1000-4) different from the first image projection apparatus.

2. The image projection apparatus according to claim 1, **characterized in that** the first image data is input from an image signal outputting apparatus (2000),
wherein the second image data is input from the image signal outputting apparatus via the second image projection apparatus.

3. The image projection apparatus according to claim 1, **characterized in that** both the first image data and the second image data are input from an image signal outputting apparatus (2000).

4. The image projection apparatus according to any one of claims 1 to 3, **characterized in that** in a case where the first image area and the second image area are arranged in a horizontal direction in the projection image data, the generating unit writes one line of the first image data and the second image data in another memory, reads a written image data from the other memory, and generates the projection image data.

5. The image projection apparatus according to any one of claims 1 to 3, **characterized in that** in a case where the first image area and the second image area are arranged in a vertical direction in the projection image data, the generating unit writes one frame or a predetermined area of the first image data and the second image data in another memory, reads a written image data from the other memory, and generates the projection image data.

6. The image projection apparatus according to any one of claims 1 to 5, **characterized in that** the generating unit generates a projection image data dot by dot from the first image data and the second image data in a case where a number of pixels of the first image data is smaller than a maximum number of pixels of the projection image data.

7. The image projection apparatus according to any one of claims 1 to 5, **characterized in that** the generating unit scales the first image data and the second image data and generates the projection image data in a case where a number of pixels of the first image data is larger than a maximum number of pixels of the projection image data.

8. The image projection apparatus according to any one of claims 1 to 7, **characterized in that** the generating unit performs luminance reduction processing for the second image area.

9. The image projection apparatus according to any one of claims 1 to 8, **characterized in that** the generating unit delays timing for generating the projection image data according to timing at which the second image data is input in a case where the second image data is input later than the first image data.

10. The image projection apparatus according to any one of claims 1 to 9, **characterized in that** the generating unit sets the projection image data so as not to include the second image area in a case where an overlap amount between the first image data and the second image data is equal to or larger than a predetermined amount.

11. A multi-projection system comprising:
the first image projection apparatus (1000-1, 1000-2, 1000-3) according to any one of claims 1 to 10; and
a second image projection apparatus (1000-2, 1000-3, 1000-4),
**characterized in that** part corresponding to the second image area among an image projected by the first image projection apparatus overlaps part of an image projected by the second image projection apparatus.

12. An image processing method of a first image projection apparatus (1000-1, 1000-2, 1000-3) configured to project an image, the image processing method comprising the steps of:
receiving an input of first image data;
receiving an input of second image data; and
generating projection image data that includes a first image area corresponding to the first image data and a second image area corresponding to the second image data,
**characterized in that** the second image data is at least part of image data input to a second image projection apparatus (1000-2, 1000-3, 1000-4) different from the first image projection apparatus.

13. A program for causing a computer to execute the image processing method according to claim 12.
